Europäisches Patentamt

European Patent Office

Office européen des brevets

(19)

(11) EP 0 644 154 B1

(12) FASCICULE DE BREVET EUROPEEN

(45) Date de publication et mention
de la délivrance du brevet:
**21.11.2001 Bulletin 2001/47**

(51) Int Cl.[7]: **C01B 21/072**

(21) Numéro de dépôt: **94401942.1**

(22) Date de dépôt: **01.09.1994**

(54) **Procédé de préparation en continu de nitrure d'aluminium par carbonitruration d'alumine**

Verfahren zur kontinuierlichen Herstellung von Aluminiumnitrid durch Karbonitridierung von Alumina

Process for the continuous preparation of aluminium nitride by the carbonitridation of alumina

(84) Etats contractants désignés:
**AT BE CH DE DK ES FR GB GR IE IT LI LU NL SE**

(30) Priorité: **17.09.1993 FR 9311114**

(43) Date de publication de la demande:
**22.03.1995 Bulletin 1995/12**

(73) Titulaire: **Atofina**
**92800 Puteaux (FR)**

(72) Inventeurs:
• **Ravenel, Pierre**
**F-69230 Saint-Genis-Laval (FR)**
• **Disson, Jean-Pierre**
**F-69390 Vernaison (FR)**
• **Bachelard, Roland**
**F-69007 Lyon (FR)**

(56) Documents cités:
**EP-A- 0 266 927** **EP-A- 0 519 806**
**FR-A- 1 331 312** **US-A- 3 032 398**
**US-A- 5 219 804**

**Description**

L'invention a pour objet un procédé continu de préparation de nitrure d'aluminium par carbonitruration d'alumine.

On connaît des procédés de préparation de nitrure d'aluminium par carbonitruration d'alumine mettant en oeuvre un réacteur à lit fluidisé (voir par exemple la demande de brevet européen 0 266 927, la demande japonaise 63.297205, la demande de brevet anglais 87.00208).

On a également proposé d'effectuer la réaction dans un four tournant (voir par exemple les demandes de brevet japonais 62.278109, 62.20030 et 61.74635).

On a aussi proposé de préparer le nitrure d'aluminium dans un four vertical à empilement de godets circulants (voir par exemple la demande de brevet européen 0 272 377) ou fixes (brevet japonais 1 290 562).

Ces différentes technologies présentent un certain nombre d'inconvénients.

D'une part, elles ont en commun de n'assurer qu'une production et une productivité limitées car le volume utile des réacteurs est toujours faible.

D'autre part, les produits obtenus se caractérisent en général par leur hétérogénéité due à une large distribution du temps de séjour des réactifs dans le four. Ceci est en particulier le cas du four tournant et du réacteur à lit fluidisé fonctionnant en continu.

On a encore proposé d'effectuer la réaction dans un réacteur méthodique ou à lit coulant fonctionnant en continu (voir la demande de brevet européen 0 519 806 et la demande WO 92/16467). Ces procédés permettent d'atteindre une production proche d'un kilogramme voire de quelques kilogrammes de nitrure d'aluminium par heure. Cependant, la productivité de ces réacteurs reste faible.

Il va de soi que ces défauts sont rédhibitoires et que le besoin est permanent d'augmenter la productivité des équipements tout en conservant à la fois une production et une homogénéité du produit élevées.

L'invention propose donc un nouveau procédé de préparation en continu de nitrure d'aluminium par carbonitruration d'alumine, ce procédé étant caractérisé en ce que la réaction est effectuée dans un réacteur fonctionnant à lit coulant et comportant une pluralité de conduits, la zone réactionelle de chaque conduit présentant un rapport surface d'échange/volume compris entre 5 m$^{-1}$ et 150 m$^{-1}$. De préférence, ce rapport est compris entre 10 m$^{-1}$ et 50 m$^{-1}$.

Par zone réactionnelle on entend ici la zone du réacteur présentant une température compatible avec la réaction de carbonitruration de l'alumine, cette température étant généralement comprise entre 1350 et 2000°C.

Par surface d'échange, on entend ici la surface de la(des) paroi(s) interne(s) du(des) conduit(s) de la zone réactionnelle.

Selon l'invention la réaction entre l'alumine, le carbone et l'azote est effectuée dans un réacteur à lit coulant.

Le réacteur est alimenté au moyen de granulés obtenus par mise en forme d'une pâte constituée par un mélange d'alumine et de carbone et avantageusement, notamment pour faciliter la préparation de cette pâte, d'un liant susceptible éventuellement de servir d'apport complémentaire en matière(s) première(s).

Par liant, on entend ici tout produit qui confère aux granulés une résistance mécanique compatible avec le procédé selon l'invention. Généralement, cette résistance mécanique est déterminée par mesure de la résistance à l'écrasement et de la perte à l'attrition.

Lorsque le liant est constitué par une résine thermodurcissable capable de générer du carbone lors de sa pyrolyse, les proportions de carbone et de résine thermodurcissable sont ajustées afin de conférer en même temps une porosité et une résistance mécanique satisfaisantes aux granulés.

Le noir de carbone apporte le volume poreux favorable à la vitesse de carbonitruration et la résine consolide les granulés.

La résine thermodurcissable peut être avantageusement choisie parmi les résines formophénoliques en solution aqueuse, mais il va de soi que d'autres résines peuvent être utilisées telles que les résines époxy, polyester, polyimides.

Le noir peut être choisi dans une large gamme de noirs de carbone, pour autant que le diamètre moyen des grains de noir se situe dans la zone 0,5 à 10 μm et de préférence 1 à 5 μm et que leur volume poreux soit au moins égal à 0,3 cm$^3$/g. A titre purement indicatif, on mentionnera notamment le noir d'acétylène dont le volume poreux peut atteindre 10 cm$^3$/g.

Quant à l'alumine, il convient de choisir une alumine de haute pureté et une dimension des grains du même ordre de grandeur que celles du noir est recommandée. Pour la préparation de la pâte (et des granulés) et pour des raisons d'homogénéisation, il peut être avantageux de faire appel à un dispersant par exemple du type sel d'ammonium d'un acide polyacrylique.

Dans la préparation des granulés, on met en oeuvre d'une manière générale une quantité de carbone total, c'est-à-dire carbone tel quel et carbone généré par la résine thermodurcissable égal ou supérieur à la stoechiométrie de la réaction de carbonitruration (rapport C/Al$_2$O$_3$ = 3) : cet excès peut atteindre 100 % et est de préférence compris entre 0 et 50 %.

Ces granulés d'alimentation présentent une résistance à l'écrasement généralement comprise entre 0,2 et 3 MPa (mesurée selon la méthode "Bulk Crushing Strength" - Shell method) et une perte à l'attrition généralement inférieure à 15 %. Cette perte à l'attrition est mesurée selon la méthode qui consiste à introduire 25 g de granulés dans un tube métallique cylindrique fermé (diamètre interne 36 mm, longueur 305 mm), à fixer ledit tube sur un support tournant de telle sorte que l'axe de rotation du support passe par le milieu de la longueur du tube. Après une heure de traitement à une vitesse de 25 rpm, les solides obtenus sont tamisés (grille de 425 μm), les fines sont récupérées et pesées.

La perte à l'attrition est exprimée par la relation :

$$A \% = \frac{P2}{P1} \times 100$$

dans laquelle :

- A % représente la perte à l'attrition ;
- P1 représente le poids initial des granulés ;
- P2 repésente le poids de fines obtenues ;

La percolation de la charge par l'azote est avantageusement réalisée par introduction en continu du gaz à la partie inférieure du(des) conduit(s) du réacteur.

La partie supérieure du(des) conduit(s) du réacteur est reliée à un collecteur des gaz d'exhaure, lesdits gaz constitués essentiellement de CO et de $N_2$ en excès pouvant être dirigés vers la base d'un four d'incinération.

Après un temps de réaction suffisant pour que la réaction de carbonitruration soit complète, on récupère après refroidissement des granulés pouvant contenir un excès de carbone (AlN + C), lesdits granulés présentant une teneur en $\alpha Al_2O_3$ résiduaire généralement inférieure à 0,5 % par rapport à AlN (mesure effectuée par diffraction des rayons X). A titre purement indicatif, ce temps de réaction peut varier de 0,5 à 25 heures.

Le carbone excédentaire peut être éliminé par combustion dans un gaz contenant de l'oxygène, de préférence à une température n'excédant pas 700°C.

Le nitrure d'aluminium pur est finalement désaggloméré, par exemple dans un broyeur à jet d'air, avantageusement équipé d'une chambre de broyage revêtue d'élastomère, afin de prévenir toute contamination.

La poudre de nitrure d'aluminium obtenue grâce à la mise en oeuvre du procédé décrit ci-avant se présente sous forme de particules de taille moyenne comprise entre 0,5 et 5 μm, constituées d'AlN avec une teneur résiduaire en $\alpha Al_2O_3$ n'excédant pas 0,5 % (en poids par rapport à AlN) et une surface spécifique B.E.T. généralement au moins égale à 2 $m^2$/g et pouvant atteindre 5 $m^2$/g.

Selon le deuxième mode, utilisé de préférence, le procédé conforme à l'invention est mis en oeuvre dans un réacteur à lit coulant.

L'expression "lit coulant" est utilisée ici dans son sens conventionnel, à savoir qu'elle désigne un réacteur de type à écoulement piston.

Plus précisément, la réaction entre l'alumine, le carbone et l'azote est effectuée dans un réacteur à lit coulant fonctionnant à taux de remplissage constant, à temps de séjour des réactifs homogène et constant et à percolation de la charge dans des conditions assurant une composition homogène de la phase gazeuse autour de chaque particule à un niveau donné et des échanges thermiques et des transferts de masse intenses.

Dans ce procédé, le taux de remplissage constant peut être obtenu grâce à une extraction continue, par exemple par doseur pondéral ou volumétrique situé à la base du lit coulant, et à un écoulement type piston de la charge dans une virole à section constante.

Dans le procédé conforme à l'invention, le réacteur assure au moins les fonctions :

- de réchauffeur des granulés de départ (matières premières mises en forme), par les gaz d'exhaure chauds, c'est-à-dire d'échangeur de chaleur,
- de réacteur de carbonitruration,
- de réchauffeur de l'azote entrant dans le réacteur par contact avec les granulés sortant de la zone chaude du four.

La section des conduits de la zone réactionnelle peut présenter une forme régulière ou quelconque. A titre d'exemples de forme régulière, on peut citer le cercle, l'ellipse, l'anneau, les polygones droits ou curvilignes, réguliers ou irréguliers et les formes géométriques présentant un axe de symétrie. Préférentiellement, on utilise un conduit présentant une section de forme circulaire.

La zone réactionnelle comporte une pluralité de conduits, identiques ou différents, dont la section peut présenter une forme telle que définie ci-avant.

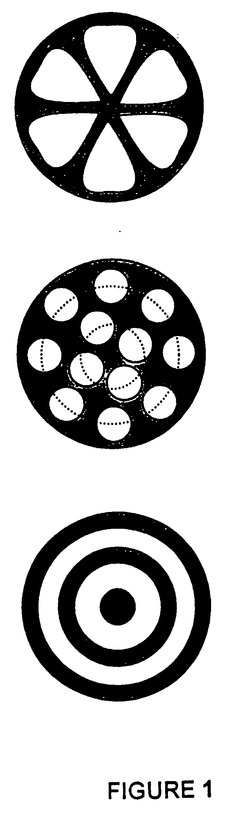

La disposition de ces conduits à l'intérieur du réacteur peut être réalisée de manière régulière ou irrégulière. Généralement, on dispose les conduits régulièrement tel que par exemple le centre de chaque conduit soit situé sur un cercle ou plusieurs cercles concentriques ayant pour origine le centre du réacteur ou par emboîtement lorsqu'il s'agit d'anneaux de différentes tailles (Figure 1). Préférentiellement, on dispose les conduits de sorte que le centre de chaque conduit se situe sur un cercle ayant pour origine le centre du réacteur.

L'espace entre les conduits est en général constitué de matière conductrice de la chaleur. A titre d'exemples, on peut citer le graphite, le tungstène et le molybdène. Préférentiellement, on utilise la même matière que celle qui constitue les conduits, celle-ci consistant généralement en graphite.

La zone de réchauffage de l'azote, contiguë à ladite zone réactionnelle, peut également l'être ou n'être constituée que par un conduit unique ou plus généralement par un nombre différent de conduits et/ou par un ou plusieurs conduits de forme et/ou de taille différentes.

Généralement, la partie inférieure du réacteur est prolongée par une virole de forme tronconique comprenant une alimentation en azote et l'extrémité inférieure de cette virole possède un doseur volumétrique étanche permettant l'extraction des granulés en vue de leur pesée en continu.

Le niveau des granulés frais alimentant le réacteur en continu est maintenu constant grâce à une sonde fixant le niveau de remplissage, cette sonde étant située dans la partie supérieure du réacteur.

Les granulés carbonitrurés chauds, en poursuivant leur déplacement vers la partie inférieure du réacteur sont progressivement refroidis par l'azote introduit en continu. Les granulés froids sont extraits grâce au doseur volumétrique ci-avant défini.

On extrait ainsi des granulés froids pouvant contenir un excès de carbone (AIN + C), lesdits granulés présentant une teneur en $\alpha Al_2O_3$ résiduaire inférieure à 0,5 % par rapport à AIN (mesure effectuée par diffraction des rayons X).

Le carbone excédentaire peut être éliminé par combustion dans un gaz contenant de l'oxygène, de préférence à une température n'excédant pas 700°C.

Le nitrure d'aluminium pur est finalement désaggloméré, par exemple dans un broyeur à jet d'air, avantageusement équipé d'une chambre de broyage revêtue d'élastomère, afin de prévenir toute contamination.

La poudre de nitrure d'aluminium obtenue grâce à la mise en oeuvre du procédé décrit ci-avant se présente sous forme de particules de taille moyenne comprise entre 0,5 et 5 $\mu$m, constituées d'AIN avec une teneur résiduaire en $\alpha Al_2O_3$ n'excédant pas 0,5 % (en poids par rapport à AIN) et une surface spécifique B.E.T. au moins égale à 2 m$^2$/g et pouvant atteindre 5 m$^2$/g.

L'invention est illustrée par les exemples suivants :

*Exemple 1* (référence)

1 - On mélange 550 parties en poids d'alumine de haute pureté, finement broyée (taille moyenne des grains : 1 $\mu$m - Norme ASTM C678; volume poreux : 0,76 cm$^3$/g) avec 182 parties en poids de noir d'acétylène (taille moyenne des grains : 2 à 3 $\mu$m; volume poreux : 7,0 cm$^3$/g), 257 parties en poids de résine formophénolique en solution aqueuse (concentration 60% environ) et 11 parties en poids d'un dispersant polyacrylate d'ammonium.

Le mélange est traité dans un malaxeur revêtu d'alumine jusqu'à disparition des particules blanches d'alumine.

La pâte résultante sert à alimenter une presse à filer dont les orifices d'extrusion ont un diamètre de 3 mm. A la sortie de ces orifices, un coupeur tronçonne les joncs à une longueur de 6 mm.

Les granulés ainsi obtenus, séchés à 150°C dans une étuve ventilée (perte de poids de 10,8 %), ont la composition pondérale suivante :

- alumine : 61,6 %
- carbone : 20,4 %
- résine : 17,5 %
- dispersant : 0,5 %

La résistance à l'écrasement des granulés est de 2,8 MPa et la perte à l'attrition est égale à 2,2 %.

2 - Les granulés servent à alimenter un réacteur en graphite à lit coulant fonctionnant en continu. Le réacteur est constitué par un conduit cylindrique dont la zone réactionnelle présente un diamètre interne de 300 mm ce qui correspond à un rapport surface d'échange/volume égal à 13 m$^{-1}$.

Le débit d'alimentation des granulés est de 4,2 kg/h.

Le réacteur est alimenté à sa partie inférieure par de l'azote au débit de 16 kg/h.

La température de la paroi externe de la zone réactionnelle est de 1450-1700°C, le temps de séjour dans cette zone étant d'environ 12 heures.

A la sortie de la zone réactionnelle, les granulés carbonitrurés refroidis sont soutirés à la vitesse de 2,40 kg/h. (ce qui correspond à 2,04 kg/h de nitrure d'aluminium à 100 %).

Dans ces conditions, la productivité du réacteur est égale à 0,0412 kg de nitrure d'aluminium à 100 % par heure et par litre de zone réactionnelle.

3 - Les granulés sont repris et étalés sur des plateaux en inconel en couche d'environ 1 cm d'épaisseur puis chargés dans un four discontinu chauffé électriquement, la température étant maintenue homogène à 650°C +/- 5°C par circulation d'air. On maintient cette température pendant 8 heures. La perte de masse est d'environ 12,5 %.

Après ce traitement, le taux de carbone libre résiduaire est inférieur à 700 ppm, la teneur en oxygène ne dépassant pas 1 %.

Le nitrure d'aluminium ainsi obtenu est finalement désaggloméré dans un broyeur à jet d'air, aux parois revêtues d'élastomère.

La taille moyenne des particules de nitrure d'aluminium final est de 1 $\mu$m et la surface spécifique B.E.T. de ce nitrure d'aluminium est 4 m$^2$/g.

*Example 2*

On opère dans les conditions de l'exemple 1 en présence d'un réacteur dont. la zone réactionnelle est constituée de quatre conduits de section circulaire inscrits dans un cercle de 300 mm de .diamètre. Chaque conduit présente un diamètre de 110 mm, définissant un rapport surface d'échange/volume égal à 36 m$^{-1}$.

Le débit d'alimentation des granulés est de 4,05 kg/h.

Le réacteur est alimenté à sa partie inférieure par de l'azote au débit de 24 kg/h.

Le temps de séjour dans la zone réactionnelle est d'environ 7 heures.

A la sortie de la zone réactionnelle, les granulés carbonitrurés refroidis sont soutirés à la vitesse de 2,3 kg/h. (ce qui correspond à 2,0 kg/h de nitrure d'aluminium à 100 %).

Dans ces conditions, la productivité du réacteur est égale à 0,075 kg de nitrure d'aluminium à 100 % par heure et par litre de zone réactionnelle.

### Exemple 3 (Comparatif)

On opère dans les conditions de l'exemple 1 en présence d'un réacteur en graphite dont la zone réactionnelle est constituée d'un conduit de section circulaire présentant un diamètre de 800 mm ce qui correspond à un rapport surface d'échange/volume égal à 5 m$^{-1}$.

Le débit d'alimentation en azote est de 20 kg/h.

Le débit d'alimentation en granulés est de 5 kg/h ce qui correspond à 2,5 kg/h de nitrure d'aluminium à 100 %.

Le temps de séjour dans la zone réactionnelle est d'environ 90 heures.

Dans ces conditions, la productivité du réacteur est égale à 0,007 kg de nitrure d'aluminium à 100 % par heure et par litre de zone réactionnelle.

### Exemple 4 (comparatif)

On opère dans les conditions de l'exemple 1, la carbonitruration d'alumine s'effectuant dans la zone réactionnelle du réacteur fonctionnant en continu par charges successives.

On introduit dans la zone réactionnelle du réacteur 45 kg de granulés par séquence.

La température de la paroi externe de la zone réactionnelles est de 1500°C.

Le temps de séjour dans la zone réactionnelle est d'environ 23 heures.

Lorsque la réaction de carbonitruration est terminée, les granulés sont soutirés et la zone réactionnelle est remplie à nouveau par des granulés frais.

Durant cette opération de soutirage-remplissage qui dure environ une heure, la température de la paroi externe de la zone réactionnelle est maintenue constante, à environ 1500°C.

Dans ces conditions, la productivité du réacteur est égale à 0,023 kg de nitrure d'aluminium à 100 % par heure et par litre de zone réactionnelle.

### Revendications

1. Procédé de préparation en continu de nitrure d'aluminium par réaction de carbonitruration à partir d'alumine, de carbone et d'azote **caractérisé en ce que** la réaction est effectuée dans un réacteur fonctionnant à lit coulant et comportant une pluralité de conduits, la zone réactionnelle de chaque conduit présentant un rapport surface d'échange/volume compris entre 5 et 150 m$^{-1}$.

2. Procédé de préparation selon la revendication 1 **caractérisé en ce que** la pluralité de conduits est disposée régulièrement et de sorte que le centre de chaque conduit se situe sur un cercle ayant pour centre le centre du réacteur.

3. Procédé selon l'une des revendications 1 ou 2, **caractérisé en ce que** le rapport surface d'échange/volume varie de 10 à 50 m$^{-1}$.

4. Procédé selon l'une des revendications 1 ou 2, **caractérisé en ce que** l'alumine et le carbone, associés à un liant, sont mis en oeuvre sous forme de granulés présentant une résistance à l'écrasement comprise entre 0,2 et 3 MPa et une perte de l'attrition inférieure à 15 %.

### Patentansprüche

1. Verfahren zur kontinuierlichen Herstellung von Aluminiumnitrid durch eine Carbonitridierungsreaktion aus Aluminiumoxid, Kohlenstoff und Stickstoff, **dadurch gekennzeichnet, daß** die Reaktion in einem Reaktor durchgeführt wird, der nach dem Fließbettprinzip funktioniert und eine Vielzahl an Leitungen aufweist, wobei die Reaktionszone einer jeden Leitung ein Verhältnis Austauschfläche/Volumen zwischen 5 und 150 m$^{-1}$ hat.

2. Herstellungsverfahren nach Anspruch 1, **dadurch gekennzeichnet, daß** die Vielzahl der Leitungen gleichmäßig und derart angeordnet ist, daß die Mitte jeder Leitung auf einem Kreis liegt, der die Reaktormitte zum Mittelpunkt hat.

3. Verfahren nach einem der Ansprüche 1 oder 2, **dadurch gekennzeichnet, daß** das Verhältnis Austauschfläche/Volumen von 10 bis 50 m$^{-1}$ reicht.

4. Verfahren nach einem der Ansprüche 1 oder 2, **dadurch gekennzeichnet, daß** das Aluminiumoxid und der Kohlenstoff, die an ein Bindemittel gebunden sind, in Form von Granulat eingesetzt werden, das eine Druckfestigkeit zwischen 0,2 und 3 MPa und einen Abriebverlust von weniger als 15 % hat.

### Claims

1. Process for continuously making aluminium nitride by a carbonitriding reaction starting from alumina, carbon and nitrogen, **characterized in that** the reaction is carried out in a reactor operating as a moving-bed reactor and comprising a plurality of conduits, the reaction zone of each conduit having an exchange surface area/volume ratio of between 5 and 150 $m^{-1}$.

2. Preparation process according to Claim 1, **characterized in that** the plurality of conduits are arranged uniformly, so that the centre of each conduit lies on a circle whose centre is the centre of the reactor.

3. Process according to either of Claims 1 and 2, **characterized in that** the exchange surface area/volume ratio varies from 10 to 50 $m^{-1}$.

4. Process according to one of Claims 1 and 2, **characterized in that** the alumina and carbon, combined with a binder, are employed in the form of granules having a crushing strength of between 0.2 and 3 MPa and an attrition loss less than 15%.

FIGURE 1